Europäisches Patentamt

European Patent Office

Office européen des brevets

(11) Publication number: **0 493 983 A1**

# EUROPEAN PATENT APPLICATION

(21) Application number: **91312102.6**

(22) Date of filing: **31.12.91**

(51) Int. Cl.⁵: **B65D 85/57**, G11B 33/04, G11B 23/023

(30) Priority: **04.01.91 GB 9100183**
**25.06.91 GB 9113689**

(43) Date of publication of application:
**08.07.92 Bulletin 92/28**

(84) Designated Contracting States:
**AT BE CH DE DK ES FR GB IT LI LU NL SE**

(71) Applicant: **TRIANGLE PRESS LIMITED**
**Smith Forge, North End Road**
**Yatton, Bristol BS19 4AU(GB)**

(72) Inventor: **Pike, Keith Reginald**
**8 Edward Road West**
**Clevedon, BS21 7BY(GB)**

(74) Representative: **Marles, Alan David**
**Stevens, Hewlett & Perkins 1 St. Augustine's**
**Place**
**Bristol BS1 4UD(GB)**

(54) **Recording media packaging.**

(57) There is provided a package 10 made from a cardboard blank having two folds 11, 12 to define two panels 13, 14 and a spine 15 disposed therebetween. The panel 14 carries a hub 16 to which a compact disc is attached. Panel 13 may then be folded over to produce the package, the thickness of the spine 15 accommodating the thickness of the boss 16 and CD.

FIGURE 1

This invention relates to packaging for recording media and particularly to compact discs and audio/video cassettes.

Typically, compact discs and cassettes are packaged in rigid plastic boxes which, while they are suitable for European music shop displays, are not preferred by the American market where the packaging tends to be much more conspicuous.

In addition, the traditional plastic compact disc and cassette packages are easily damaged, frequently incurring cracks and scratches during transit and shop display. This can discourage potential customers.

In one aspect, the present invention provides a blank of rigid/semi-rigid material having hinge lines defining a series of panels, one or more of said panels having means thereon for retaining a recorded/recording article.

In one arrangement the or each retaining means is adapted to retain a compact disc. In another arrangement the or each retaining means is adapted to retain a cassette. The retaining means may comprise a central boss, e.g. as in conventional CD boxes, or, for a cassette, a spaced pair of bosses. These may be adhered to a panel. For cassettes, in particular, the or each retaining means may comprise a sleeve for receiving the cassette. The sleeve may be constituted by a folded part of the blank or may be attached to a panel.

The blank, on hinging, may define spines between at least some adjacent panels. A CD or cassette carrying panel may be connected to adjacent panel(s) via spine(s) which are at least as thick as the CD or cassette retaining means together with the CD or cassette when it is in place. The panels may be rectangular or another other suitable shape.

Preferably the blank is made from cardboard and the hinge lines may be defined by die-stamped or scored lines.

In another aspect the invention provides a package formed from such a blank. It may include one or more information book or booklets. Throughout the remainder of the specification the term booklet will be understood to cover booklet or book. The booklet may be attached to the blank, for example by stitching or gluing the spine of the booklet to a spine or to a panel of the blank, before, during or after the folding thereof. This inclusion of a booklet may require a corresponding thickening of one or more spines in order to accommodate the booklet.

Embodiments of the invention will now be described in more detail. The description makes reference to the accompanying diagrammatic drawings which:

Figure 1 shows a plan view of a blank according to the present invention,

Figure 2 shows a perspective view of a pack formed from the blank shown in figure 1,

Figure 3 shows a plan view of another blank improvement according to the present invention,

Figure 4 shows a perspective view of a pack formed from the blank shown in figure 3,

Figure 5 shows a plan view of another blank improvement according to the present invention.

Figure 6 shows a perspective view of a pack formed from the blank shown in figure 5,

Figure 7 shows a perspective view of another pack improvement of the present invention,

Figure 8 shows a perspective view of a still further pack improvement according to the present invention,

Figure 9 shows a plan view of a blank for producing a pack similar to that shown in figure 8,

Figure 10 shows a plan view of an alternative blank for producing a pack similar to that shown in figure 6.

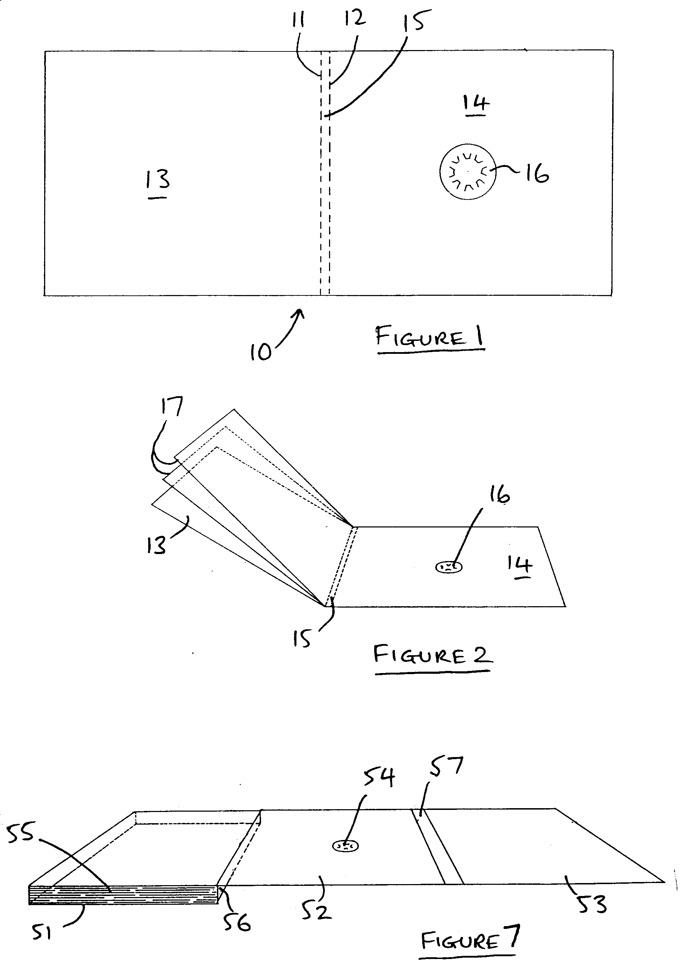

Figure 1 shows a blank 10 in the form of a rectangle of card which is divided by two fold lines 11, 12 to define two panels 13, 14 and a spine 15 interconnecting the panels. Panel 14 has a boss 16 centrally attached to it, the boss 16 being adapted to retain a compact disc (not shown) which is a snap-fit on the boss 16. Such bosses are well known in the industry, but are normally integrally formed as part of a rectangular tray on which the compact disc is held. Either type of retaining means is, however, suitable.

The panel 13 is to be folded over the panel 14 and its retained compact disc. This is more clearly shown in figure 2 which also shows an information booklet 17 attached to the spine 15 or panel 13 by any suitable means such as stitching or gluing.

The width of the spine 15 can, of course, be varied depending on the thickness of the booklet 17 and the number of compact discs. For example, the panel 13 could also have a boss 16 attached thus making a double CD pack. The booklet 17 could still, of course, be attached to the spine 15 which would be of a thickness to accommodate both CDs and the booklet.

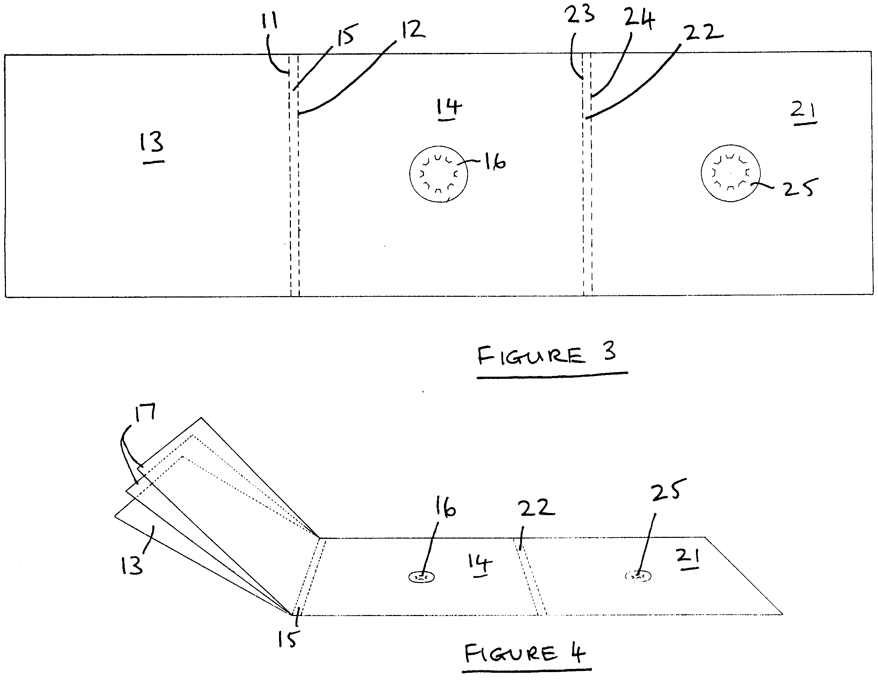

The blank 20 shown in figure 3 is very similar to the figure 1 blank and like features have been given like reference numerals where appropriate. The blank 20, however, has a third panel 21 and a second spine 22 joined to panel 14 by fold lines 23, 24. The third panel 21 may or may not be provided with a further disc retaining boss 25. The boss 25 could even be on the rear of panel 21 and could even be provided in place of the central boss 16. Likewise, the boss 16 could also be attached to panel 13.

The pack shown in figure 4 shows a booklet 17 provided on the spine 15 or panel 13, but it could, of course, be provided on spine 22 or indeed panel 21. It will be appreciated that this pack can be readily adapted to be a single CD pack or a double or other multiple CD pack.

By using a small boss 16, the panel 14 can still be used for printing information, much of which will be obscured until the CD is removed. This is not the case with known CD packaging where the boss/tray is not readily removable and covers a whole panel or a substantial part of a panel.

The use of foldable panels also renders the pack particularly suitable for either European markets or U.S. markets. In Europe the panel 21 will be folded over on to panel 14 and the CD and then panel 13 folded over to close the pack. This will produce a standard European type pack which may typically measure 142mm by 126mm on its major surfaces.

In the U.S., however, long boxes are preferred and so the panels 13 and the booklet 17 could remain unfolded for the U.S. market whilst the panel 21 is folded over the panel 14. Both panels 14 and 21 could have CDs attached. In the U.S. at present the double size packs are sold with a 'dummy' assembly alongside the standard CD pack. This 'dummy' assembly is simply discarded by the purchaser.

The present arrangement can, however, be wrapped in either open orientation which eliminates waste from the current U.S. design or folded orientation for Europe.

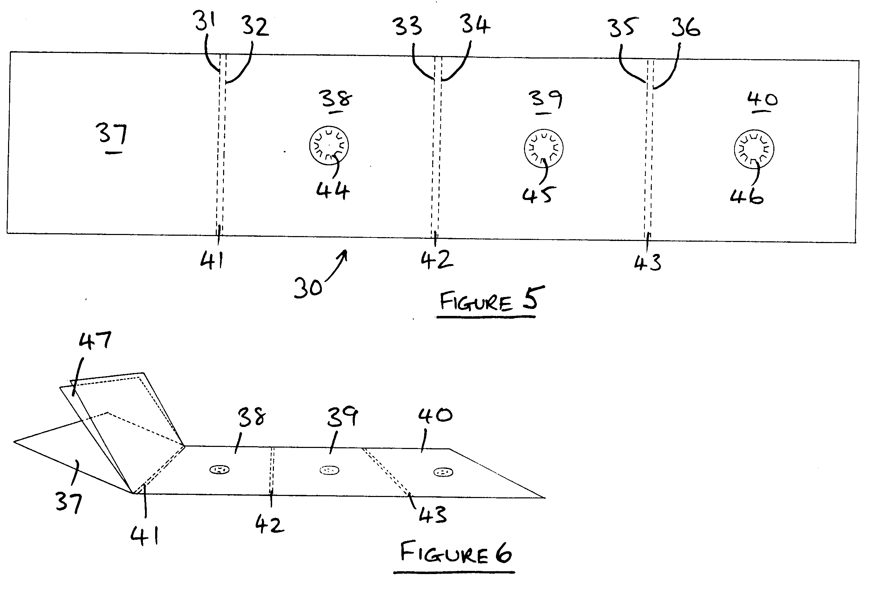

Figure 5 shows a blank 30 which has a series of fold lines 31, 32, 33, 34, 35, 36 to define four panels 37, 38, 39 and 40 interconnected by spines 41, 42, 43. Bosses 44, 45, 46 are centrally attached to panels 38, 39, 40 to create a triple CD pack which is better shown in figure 6. Any of the bosses 44, 45, 46 could be omitted to give a single or a double pack and more bosses could be added to the rear of the panels, if desired, or to panel 37.

Again, a booklet 47 is attached either to the first panel 37 or the spine 41. The panel could be folded in a number of ways which will, of course, affect the width of the spines. For example, the two end panels 37, 40 could be folded over the adjacent inner panels 38, 39. This arrangement would be suitable for the US market in view of its double-size. For Europe the arrangement could then be folded about the central spine 42.

Alternatively, the end panel 40 could be folded over panel 39, then over 38 and then over 37 for Europe, but omitting the final step for the USA. Also, it will be readily apparent that the booklet 47 could be attached to any spine provided suitable spine width adjustments were made and similarly any arrangement of bosses is possible, even attached to the rear of certain panels either in addition or instead of the boss on the front of the panel.

Figure 7 shows a pack 50 having three panels 51, 52, 53. A boss 54 is attached to the central panel, and/or could be fitted to panel 53, and a booklet 55 is attached to a spine 56 defined by fold lines between panels 51 and 52. Another spine 57 is defined by fold lines between panels 52 and 53 and a booklet could be attached to spine 57 instead of or in addition to the one attached to spine 56. It will be apparent that the booklet can be of any thickness, but here is shown as being rather thick. With this arrangement the booklet is folded over panel 52 and panel 53 is folded over the booklet 55. Panel 51 then closes the pack by being folded over panel 53.

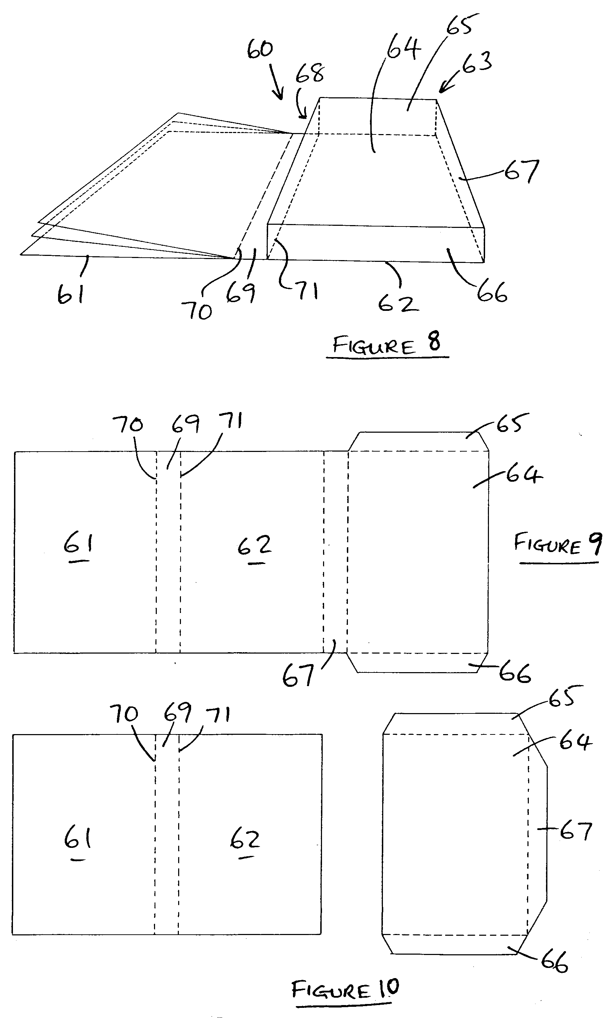

Figure 8 shows a pack 60 having first and second panels 61, 62, and having means 63 for retaining a cassette (not shown). The retaining means 63 is in the form of a sleeve defined by faces 64, 65, 66, 67 and panel 62, and has an open face 68 into which the cassette is slidably received.

Again, a booklet is attached to panel 61 which is separated from panel 62 by a spine 69 and associated fold lines 70, 71. The booklet could, however, be attached to the spine 69 which would be of a width to accommodate the booklet and the sleeve.

Figure 9 shows a blank 72 for producing a cassette pack and all the features 61 to 71 of the pack shown in figure 8 are present in a single blank which can be folded and glued as necessary.

Figure 10 shows a blank 73 in which the retaining parts of the pack that is faces 64 to 67 of the figure 8 arrangement are formed as a separate blank 74 which is then attached to the basic blank 73. It will be appreciated that this is a suitable alternative to providing a pair of spaced retaining hubs adapted to retain a cassette. It is possible to adapt the figure 4, 5, 6, 7 and 8 arrangements to provide packs for more than one cassette and reference to the multiple CD packs will assist this.

It will be realised that compared to known packs, the booklets where used in the above described arrangements are easier to use and are difficult to lose because they are attached to the pack. This is in contrast to known arrangements for CDs where the booklet is slidably received in guides attached to the transparent front flap, and for cassettes. Not only does the booklet have to be removed, but it can be misplaced. Also the continual removal and reinsertion tends to damage the booklets.

It is also possible to extend designs over a number of panels to produce an elongate, continuous design which is not possible with known arrangements, as well as providing a more extensive area for information or artwork.

Also, the cardboard packs are easier and cheaper to produce and result in lighter packs which are consequently easier to handle and cheaper to transport. In addition, they are not as fragile.

There are further economies in the packaging area in that the packs can be filled and folded by relatively simple machines or by hand whereas conventional arrangements are hand packed or are packed using very complicated machinery. Labour costs can, therefore, be reduced.

The present arrangements are particularly adaptable in that any number of panels can be used with any number of retaining bosses on either side of the panels. In addition, the blanks may be in shapes other than a straight series of panels. For example, a cruciform arrangement could be folded into a suitable pack.

Also, the panels may be of a shape other than hexagonal or pentagonal panels could be employed for possibly novelty reasons.

Although it is stated that the packs are formed from card, it will be appreciated that any other suitable rigid or semi-rigid material could be used. Also, other retaining means could be used in place of the bosses.

## Claims

1. A blank of rigid/semi-rigid material having hinge lines defining a series of panels, one or more of said panels having means thereon for retaining a recorded/recording article.

2. A blank as claimed in claim 1 wherein the or each retaining means is adapted to retain a compact disc.

3. A blank as claimed in claim 2 wherein the or each retaining means is attached to its associated panel.

4. A blank as claimed in claim 3 wherein the or each retaining means is in the form of a boss mounted on its associated panel.

5. A blank as claimed in claim 4 wherein the or each retaining means is adhesively attached to its associated panel.

6. A blank as claimed in claim 1 wherein the or each retaining means is adapted to retain a cassette.

7. A blank as claimed in claim 6 wherein the or each retaining means comprises a pair of spaced bosses adhered to the associated panel.

8. A blank as claimed in claim 6 wherein the or each retaining means comprises a sleeve.

9. A blank as claimed in claim 8 wherein the or each sleeve is constituted by a folded part of the blank.

10. A blank as claimed in any one of claims 1 to 9 wherein spines are defined between at least some adjacent panels.

11. A blank as claimed in any one of claims 1 to 10 wherein the panels are rectangular.

12. A blank as claimed in any one of claims 1 to 11 made from cardboard.

13. A blank as claimed in any one of claims 1 to 12 wherein at least one panel has retaining means on both sides.

14. A package for one or more recorded/recording articles comprising a series of panels formed from a blank of rigid/semi-rigid material and connected by hinge lines, one or more of said panels having means thereon for retaining a recorded article.

15. A package as claimed in claim 14 wherein the or each recorded article is a compact disc.

16. A package as claimed in claim 15 wherein the or each retaining means is in the form of a boss mounted on its associated panel.

17. A package as claimed in claim 14 wherein the or each recorded article is a cassette.

18. A package as claimed in claim 17 wherein the or each retaining means is in the form of a pair of spaced bosses adhered to the associated panel.

19. A package as claimed in claim 17 wherein the or each retaining means is in the form of a sleeve.

20. A package as claimed in claim 19 wherein the or each sleeve is integrally formed with the blank.

21. A package as claimed in any one of claims 14 to 20 wherein spines are defined between at least some adjacent panels.

22. A package as claimed in any one of claims 14 to 21 wherein the package incorporates one or more books or booklets.

**23.** A package as claimed in claim 22 wherein the or each book or booklet is attached to one of said panels.

**24.** A package as claimed in claim 22 in configuration with claim 21 wherein the or each book or booklet is attached to one of said spines or panels.

FIGURE 1

FIGURE 2

FIGURE 7

FIGURE 3

FIGURE 4

EP 0 493 983 A1

FIGURE 5

FIGURE 6

FIGURE 8

FIGURE 9

FIGURE 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 278 594 (ADES)<br><br>* the whole document *<br>--- | 1,11,12, 14 | B65D85/57<br>G11B33/04<br>G11B23/023 |
| X | GB-A-2 219 573 (C M C S) | 1-5, 10-12, 14-16,21 | |
| Y | * page 5, line 7 - page 8, line 23; figures *<br>--- | 13 | |
| X | FR-A-1 213 757 (LE MONNIER)<br><br>* the whole document *<br>--- | 1,2,11, 14,15, 21-24 | |
| X | FR-A-2 209 971 (BADISCHE ANILIN)<br><br>* claims; figure *<br>--- | 1,6,7, 10-12, 14,17, 18,21-24 | |
| X | FR-A-2 157 064 (IMPRIMERIE RAAB)<br><br>* claims; figures *<br>--- | 1,6,8,9, 11,12, 14,17, 19,20 | TECHNICAL FIELDS SEARCHED (Int. Cl.5)<br><br>B65D<br>G11B |
| P,Y | EP-A-0 420 350 (PHILIPS & DU PONT)<br>* column 8, line 47 - column 9, line 5; figures 10,12 *<br><br>----- | 13 | |

The present search report has been drawn up for all claims

| Place of search | Date of completion of the search | Examiner |
|---|---|---|
| THE HAGUE | 02 APRIL 1992 | NEWELL P.G. |